Europäisches Patentamt

(19) European Patent Office

Office européen des brevets

(11) Publication number: **0 257 906**
**B1**

(12) **EUROPEAN PATENT SPECIFICATION**

(45) Date of publication of the patent specification:
06.06.90

(21) Application number: **87307085.8**

(22) Date of filing: **11.08.87**

(51) Int. Cl.⁵: **F16K 31/04**

㊼ Valve.

(30) Priority: **14.08.86 JP 190796/86**

(43) Date of publication of application:
**02.03.88 Bulletin 88/9**

(45) Publication of the grant of the patent:
**06.06.90 Bulletin 90/23**

(84) Designated Contracting States:
**DE FR GB IT**

(56) References cited:
**US-A- 4 452 423**
**US-A- 4 463 930**

(73) Proprietor: **TOYO ENGINEERING CORPORATION, 2-5,
Kasumigaseki 3-chome, Chiyoda-ku, Tokyo 100(JP)**

(72) Inventor: **Fujita, Yuichi, 16-1-101, Kakemama 2-chome,
Ichikawa-shi Chiba(JP)**
Inventor: **Yanaru, Hideaki, 27-14 Masago, 5-chome,
Chiba-shi Chiba(JP)**
Inventor: **Numaguchi, Tohru, 25-16, Miyakocho 2-chome,
Chiba-shi Chiba(JP)**
Inventor: **Kaneko, Takayuki, 1946-39 Murakami,
Yachiyo-shi Chiba(JP)**
Inventor: **Okada, Mitsuo, 14-9, Zenpukuji 2-chome
Suginami-ku, Tokyo(JP)**
Inventor: **Shima, Kazumi, 24-19 Ebaradai 2-chome,
Sakura-shi Chiba(JP)**

(74) Representative: **Huntingford, David Ian et al, W.P.
THOMPSON & CO. Coopers Building Church Street,
Liverpool L1 3AB(GB)**

**Description**

This invention relates to valves. More specifically, the present invention relates to a valve having a valve body which is operated by a turning force produced by means of an electromagnetic force and which is not mechanically operated by an external source via a sliding seal portion provided therein, such as a gland packing and mechanical seal.

Actuators for the valves usually require a considerable space in a piping system assembly. In the case where equipments and piping systems need to be assembled as compactly as possible, it is desirable for the space occupied by the actuator for the valve to be made as small as possible. Not only opening and closing a flowpassage but accurate flow-rate adjusting function is required for such valves.

It is known from U.S. Patent Specification No. 4 452 423 for a valve to comprise a rotor means which can rotate within a tubular flowpassage, rotating magnetic field generating means fixedly positioned around said rotor means, a first screw means which is rotated coaxially with the rotor means together with the latter, a second screw means which engages the first screw means and is movable in an axial direction of the screw without being rotated in itself by the rotation of the first screw means; valve member means connected to the second screw means; and valve seat means engageable with the valve member means, whereby when the rotor means is rotated by the action of rotating magnetic field generated by the rotating magnetic field generating means, said rotation causes the second screw means to be moved in an axial direction of the screw, said movement being transmitted to the valve member to adjust the degree of opening and closing of the valve.

In the known device of U.S. 4 452 423 the rotor is supported in a cantilever manner via the first and second screw means, the second screw means being mounted non-rotatably in a holding spider ring which is itself rigidly connected to the inner surface of the flow passage.

It is an object of the present invention to improve on the manner in which the rotor is journalled within the flow passage.

In accordance with the present invention, this is achieved in that the position of the rotor means is fixed by means of bearing track means provided on the inner surface of the tubular flow passage means.

The tubular flowpassage of the valve according to the present invention may have an outside diameter which is the same as that of a tubular passage to be connected so that the external appearance thereof corresponds substantially to a part of the tubular passage of a piping system, or is of outside diameter slightly larger than of the tubular passage, or is freely selected to be smaller than the outside diameter or slightly larger than of the tubular passage.

One or more rotors of electric motors by which the valve body is actuated to control the degree of opening of the valve are installed in the tubular flowpassage. If a plurality of such rotors or motors are provided, they are normally disposed coaxially.

The rotor is located in the tubular flowpassage so that the rotor itself tends to obstruct the flow of fluid. In order to minimize the aforesaid obstruction, the rotor is provided with fluid-passing portions which are as large as possible and as many as possible to allow the fluid to pass through.

Likewise, also in the case where the motor is fixed in the tubular flowpassage, it is naturallly necessary to enlarge the cross-sectional projected areas through which area the fluid passes, by selecting a motor which allows one to make smaller the cross-sectional projected area of both of the motor and a fixing element which fixes the motor in the tubular flowpassage, which area obstructs the flow of fluid.

Considering the cases in which the rotor is in rotation and at rest, the fluid passing portion provided in the rotor, i.e. a cutout hole or the like which allows the fluid to pass through it, may be normally designed so as to allow the fluid to pass trough the portion in the same direction as the fluid flow through the tubular passage of the valve, or may be designed so as to allow the fluid to pass through the portion in a direction inclined with respect to the fluid flow through the tubular passage of the valve as required.

The shape of the cross-sectional area of the fluid passing portion is selected taking into consideration the mechanical strength of the rotor.

In the gap between the outer periphery of the rotor and the inner wall surface of the tubular flowpassage, a longitudinal slot portion may be provided on the outer periphery of the rotor or on the inner wall surface of the tubular flowpassage to reduce the flow resistance to fluid at a portion where the rotor is installed. This means for reducing the flow resistance may be used also for the aforesaid fluid passing portion.

A desired number of rotors are secured to one and the same rotational shaft, and likewise, for the motor, the desired number of rotors and stators are juxtaposed, to produce the turning force as required.

A combination of a rotor and rotating magnetic field generating means or an electric motor both of which constitute a pulse motor or A.C. servo motor constitutes a preferred valve body driving power source.

The combination of a rotor and a rotating magnetic field generating means, and an electric motor may be hereinafter collectively called "a motor assembly".

The rotational shaft of a rotor or a motor may have a mechanical or electric brake system attached thereto to stop the rotation thereof as needed.

The rotational shaft of a rotor or a motor and a valve function portion, comprising a valve body and a valve seat, may be positioned in the centre of the tubular flowpassage or may be positioned eccentrically.

Where a rotor is used for a large-size valve, the angle of a rotational shaft having first screw means with respect to a flow direction of fluid is selected according to the position of the rotating magnetic field generating source or rotating magnetic field generating means for driving the rotor, and to a direction changing mechanism adopted for the fluid. Similarly, the direction of the rotational shaft having the first screw means of the motor can be inclined at a suitable angle with respect to the flow direction of the fluid.

The rotor or motor may be positioned at upstream, downstream or both sides with respect to a valve member and a valve seat of a valve according to this invention.

In the case where the rotor or motor is positioned at both sides, the upstream and downstream rotors or the like work together to actuate the valve body.

To locate the rotor in the tubular flowpassage of the fluid, one or more fixing elements for the rotor bearing means are provided on the inner wall of the tubular flowpassage. These may be roller bearings or sliding bearings.

On the other hand, in the case where the tubular flowpassage is small in diameter or where as desired, more than one bearing track for bearing the outer periphery of the rotor to allow the rotor to rotate can be provided to form the rotor bearing means on the inner wall surface of the tubular flowpassage. For the engagement between the outer periphery of the rotor and the bearing track, a roller bearing may be employed; and where the surface of the bearing track or the like is covered with a high polymer material which can present a surface having a low coefficient of friction, or where the fluid passing through the valve has a lubricating ability, the sliding bearing by which the surface of the outer periphery and the surface of the bearing track each other may be employed.

The magnetic field generating source may be embedded into the outer wall surface of the flow passageway; further, the source is provided externally of or within the wall of the tubular flowpassage with a magnetic field generating capacity enough to impart the required turning force to the rotor.

The position of the rotational magnetic field producing means externally of the wall of the flowpassage or in the wall is adopted in that there is no need for taking the corrosion, erosion, or wear of said means caused by the fluid into consideration. It also provides a simple construction.

A cooling function element may be attached to the magnetic field generating means as needed.

Partitioning wall material used to form a pipeway or a tubular flowpassage is suitably selected from conventional metal or non-metal materials, that is, high polymer material, ceramics material and the like.

The material for the partitioning wall interposed between the magnetic field generating source for actuating the valve and the rotor to form the tubular flowpassage is desirably a material having a magnetic permeability which is as large as possible.

The position of the magnetic field generating source is determined according to the position and direction of the rotation axis of the rotor positioned in the tubular flowpassage.

One or more valve bodies are coupled through sliding screws, ball screws or the like to the rotor itself, the rotational shaft of the same, the rotational shaft of the motor or the rotational shaft mechanically coupled to the rotational shaft of the rotor.

The valve body is rectilinearly displaced by the rotation of the rotor itself or the rotational shaft of the rotor or the like through the sliding screw or ball screw, or actuated by the forward and backward moving shaft of a transmission mechanism connected to the rotor.

In the case where the torque of the rotor or motor is small, or where the displacement of the valve member with respect to the degree of rotation of the rotor or motor is reduced to enhance the ability for fine adjustment of flow rate, the transmission mechanism with various gears and other turning force transmission mechanical elements is coupled to the rotational shaft of the rotor or motor so that the rotational shaft or the forward and backward moving shaft for driving the valve member may be actuated.

On the other hand, the motor assembly in the present invention may include a stopping motor.

The valve of the present invention may be any of normal globe valve, needle valve, sluice valve, cage valve, etc.

One or more valve seats which engage with the valve member or allow the valve member to fit in to constitute a valve are provided in the tubular flowpassage.

The valve seat is provided in the tubular flowpassage of the fluid or at the end of the tubular flowpassage according to the action of the valve member.

The valve member may be disposed in such a manner that, to open the valve, the valve member is disengaged from the valve seat located at one end or both ends of the tubular flowpassage of the valve and shifted outwardly of the tubular flowpassage of the valve.

The axis common to a valve and its valve seat may not be on the same straight line which is the axis of rotation shaft of the motor or the like, and the plane of the valve seat opening may not be perpendicular to the flow direction of the fluid through the tubular passage of the valve of the present invention, because the valve body can be moved forward or backward by transmitting the rotation of the rotating shaft of the rotor or motor, through a universal joint, flexible shaft, or transmission mechanism utilized between the rotating shaft and the valve member, to valve member side end rotating rod with external thread which engage with the bore of the valve member having a sliding screw or ball screw of internal thread or with worm wheel connected to the valve member.

In order to adapt the flow characteristics (degree of valve opening vs. flow rate) of the valve related to the size, shape or others of the valve member and the valve seat to be desired flow regulation characteristics of a flowpassage system in which the valve is used, the number of poles of the magnetic field generating source, and mechanical and geometrical structural shape of the same may be varied. The position and magnitude of voltage and current applied to each of the magnetic field producing sources may be varied corresponding to the wave form and frequency of voltage and current applied and to the geometrical position of each magnetic field generating source whereby the rotational speed and turning force of the rotor or the like may be varied.

To control the operating condition of the valve member as required, the voltage and current applied to the magnetic field generating source may be any of the pulse voltage and current AC, and DC.

The rotor means rotated by the rotating magnetic field generated by the rotating magnetic field generating means may be of a magnetic material represented by pieces of iron or magnets, or a conductive material such as metal which internally generates an eddy current by means of an external magnetic field. The type which encases a conductive member such as a metal member constituting a coil to which voltage and current are not applied may be employed.

For detection of the rotational speed and the number of rotations of the rotor to detect the position of the valve body, a pick-up coil, a photo-electric switch, Hall element, Hall integrated circuit, magnetic reluctance element, Wiegant effect element, or magnetic transistor may be used. To detect the position itself of the valve body including the case when the valve is totally opened and totally closed, a differential transformer, resolver, encoder, limit switch, reed switch, piezo-electric switch, photo-electric switch, torque switch or the like may be used.

A flexible rotational shaft and its bearing means may be used to transmit the turning force of the rotational shaft of the rotor or the like to allow the presence of a bend of a flowpassage as far as the valve member and the valve seat.

Where plural sets of valve member and valve seats are provided in one valve of this invention, a branch discharging opening may be provided in a flowpassage between each set of valve member and valve seat so that a multi-direction (more than three directions) valve may be formed.

To allow the valve of this invention to posess a check valve function, a valve member and a valve seat for the check valve may be provided at a suitable position in the valve.

A hollow annular body encasing a fluid therein may be provided in the valve seat and fluid pressure within the annular body being detected and controlled to make smooth the access and contact of the·valve body to the valve seat when the valve is closed to enhance the sealing properties after the contact.

A labyrinth function portion may be provided on either or both of the valve member and valve seat for the purpose of enhancing the tightness of the seal, etc.

The invention is described further hereinafter, by way of example only, with reference to the accompanying drawings, in which:

Figs. 1, 3 and 5 are diagrammatic longitudinal sections of known valves; and

Figs. 2 and 4 respectively show diagrammatic longitudinal sectional views of two valves according to the present invention.

In these Figures, the arrows indicated by bold lines show flow direction of the fluid.

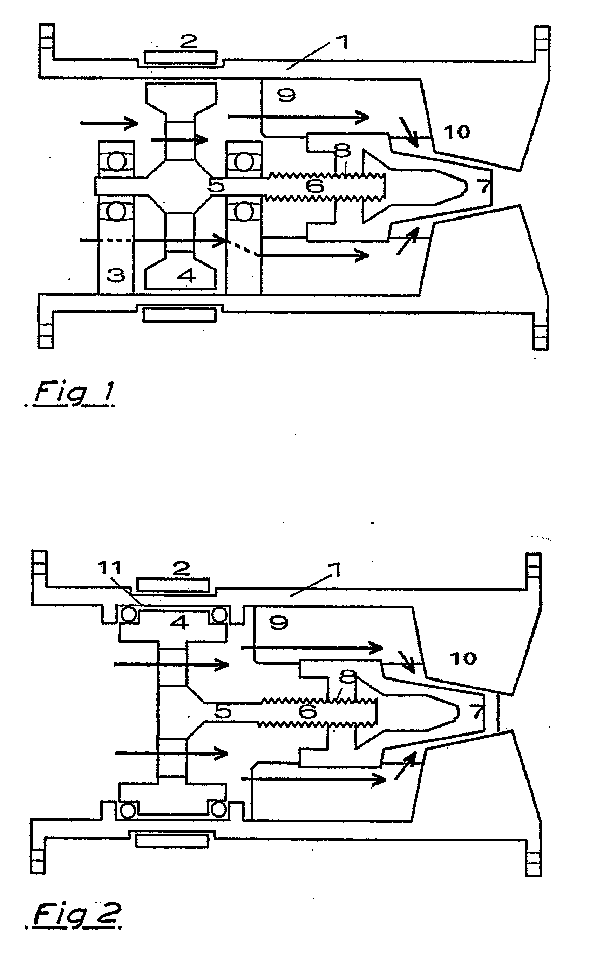

Fig. 1 shows an example of the manner in which the rotor is located in the prior art.

A group of coils 2 for generating a rotating magnetic field are disposed so as to surround a portion of the outside of a wall 1 of a tubular flowpassage having a circular cross-section.

A rotor 4 supported and positioned by means of two fixing elements 3 within the tubular flowpassage is rotated according to the direction, voltage, frequency and waveform of current supplied to the group of coils 2, for adjustment of the degree of opening of the needle valve. An externally threaded portion 6 positioned on one end of a shaft 5 of the rotor 4 is engaged with an internally threaded portion 8 formed in a valve member 7 to constitute a sliding screw thread portion of the valve.

By rotation of the rotor 4, the sliding screw thread portion functions together with a guide plate 9 which is secured to the wall 1 in order to allow the valve body to move longitudinally while preventing the rotation of the valve member 7, whereby to cause the valve member 7 selectively to engage and disengage from a valve seat 10 depending upon the direction of rotation of the rotor 4.

Fig. 2 shows a first example of a needle valve in accordance with the present invention, wherein the rotor is supported by bearing balls which roll on a bearing track portion 11 of the inner surface of the wall 1, thereby eliminating the fixing elements 3 of the known valve of Fig.1.

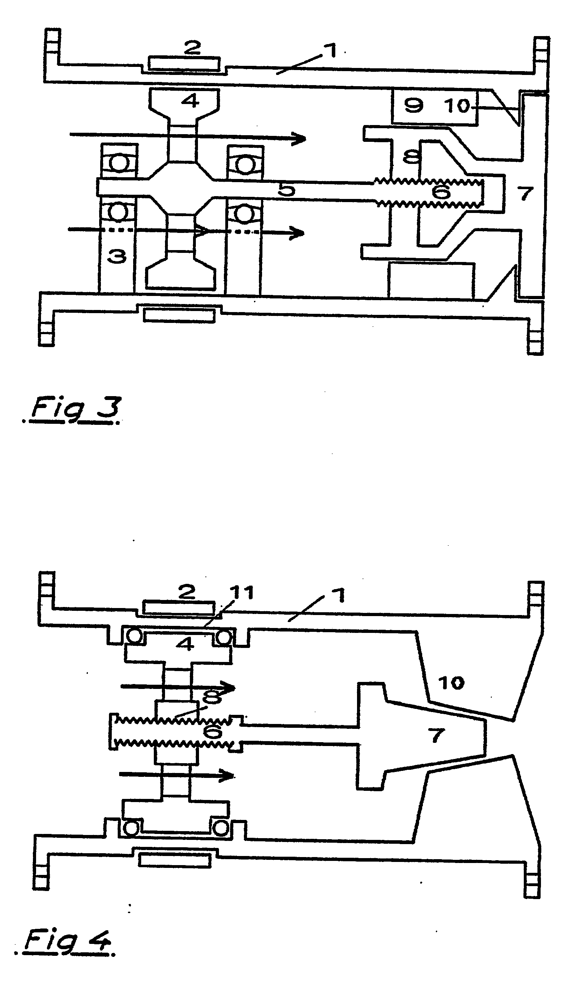

Fig. 3 shows another known valve of the type which can be mounted on a dam wall or the like and is suitable for use as a water discharge valve, wherein a valve seat 10 is located at the end of a tubular flowpassage so that, when the valve is open, the valve member 7 lies outwardly of the tubular flowpassage of the valve.

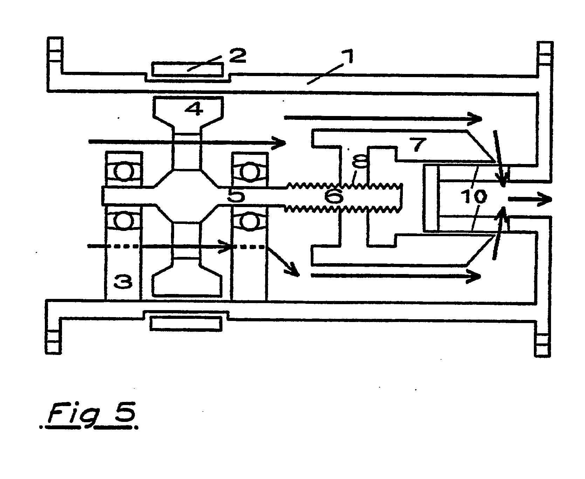

Fig. 4 shows a further example of a needle valve in accordance with the present invention in which an internally threaded rotor 4 is threadedly engaged with an actuating or propelling shaft of a valve member 7 which shaft is externally threaded.

Fig. 5 shows an example of a known sluice valve comprising two valve seats 10, and a valve member 7 having two functional portions. The rotation of the valve member 7 is prevented by suitable means similarly to Fig. 1 or the like.

## Claims

1. A valve comprising a rotor means (4) which can rotate at a fixed position within a tubular flowpassage means (1), rotating magnetic field generating means (2) fixedly positioned around said rotor means (4), a first screw means (6) which is rotated coaxially with the rotor means (4) together with the latter, a second screw means (8) which engages the first screw means (6) and is movable in an axial direction of the screw without being rotated in itself by the rotation of the first screw means (6); valve member means (7) connected to the second screw means (8); and valve seat means (10) engagable with the valve member means (7), whereby when the rotor means (4) is rotated by the action of rotating magnetic field generated by the rotating magnetic field generating means (2), said rotation causes the second screw means (8) to be moved in an axial direction of the screw (6), said movement being transmitted to the valve member (7) to adjust the degree of opening and closing of the valve, characterised in that the position of the rotor means (4) is fixed by rotor bearing means and by bearing track means (11) provided on the inner surface of the tubular flowpassage means.

2. A valve according to claim 1, wherein the rotating magnetic field generating means (2) is disposed on the outer surface of the tubular flowpassage means (1).

3. A valve according to claim 1, wherein the rotating magnetic field generating means (2) is disposed within the inner surface of the tubular flowpassage means (1).

## Patentansprüche

1. Ventil mit einer Rotoreinrichtung (4), die sich in einer festgelegten Position innerhalb einer rohrförmigen Strömungskanaleinrichtung (1) drehen kann, mit einer ein umlaufendes Magnetfeld erzeugenden Einrichtung (2), die fest um die Rotoreinrichtung (4) herum angeordnet ist, mit einer ersten Schraubeinrichtung (6), die koaxial zu der Rotoreinrichtung (4) zusammen mit der letzteren gedreht wird, mit einer zweiten Schraubeinrichtung (8), die in die erste Schraubeinrichtung (6) eingreift und in eine Axialrichtung der Schraube, durch die Drehung der ersten Schraubeinrichtung (6) bewegbar ist, ohne selbst gedreht zu werden, mit einer Ventilgliedeinrichtung (7), die mit der zweiten Schraubeinrichtung (8) verbunden ist, und mit einer Ventilsitzeinrichtung (10), die mit der Ventilgliedeinrichtung (7) in Eingriff bringbar ist, wodurch, wenn die Rotoreinrichtung (4) durch die Wirkung des umlaufenden Magnetfelds gedreht wird, das von der ein umlaufendes Magnetfeld erzeugenden Einrichtung (2) erzeugt wird, die Drehung die zweite Schraubeinrichtung (8) zu einer Bewegung in eine Axialrichtung der Schraube (6) veranlaßt, wobei die Bewegung auf das Ventilglied (7) zur Einstellung des Öffnungs- und Schließgrades des Ventils übertragen wird, dadurch gekennzeichnet, daß die Position der Rotoreinrichtung (4) durch Rotorlagereinrichtungen und durch Lagerlaufbahneinrichtungen (11) festgelegt ist, die an der Innenfläche der rohrförmigen Strömungskanaleinrichtung vorgesehen sind.

2. Ventil nach Anspruch 1, bei welchem die ein umlaufendes Magnetfeld erzeugende Einrichtung (2) an der äußeren Oberfläche der rohrförmigen Strömungskanaleinrichtung (1) angeordnet ist.

3. Ventil nach Anspruch 1, bei welchem die ein umlaufendes Magnetfeld erzeugende Einrichtung (2) in der inneren Oberfläche der rohrförmigen Strömungskanaleinrichtung (1) angeordnet ist.

## Revendications

1. Robinet comprenant un rotor (4) qui peut tournet en position fixe dans un conduit tubulaire (1), un moyen de production de champ magnétique tournant (2) placé fixe autor de ce rotor (4), un premier élément fileté (6) qui tourne avec le rotor (4) coaxialement à celui-ci, un deuxième élément fileté (8) qui est en prise avec le premier (6) et est mobile dans la direction axiale de celui-ci sans que la rotation de celui-ci le fasse tourner, un obturateur (7) joint à ce deuxième élément fileté (8), et un siège (10) contre lequel peut s'appliquer cet obturateur (7), grâce à quoi, lorsque le rotor (4) tourne par l'action du champ magnétique tournant produit par le moyen (2), sa rotation produit le déplacement du deuxième élément fileté (8) dans la direction axiale du premier (6), ce déplacement étant transmis à l'obturateur (7) pour le réglage du degré d'ouverture ou de fermeture du robinet, caractérisé par le fait que la position du rotor (4) est fixée par un moyen d'appui et par un chemin d'appui (11) prévu sur la face intérieure du conduit tubulaire.

2. Robinet selon la revendication 1, sur lequel le moyen de production de champ magnétique tournant (2) est disposé sur la face extérieure du conduit tubulaire (1).

3. Robinet selon la revendication 1, sur lequel le moyen de production de champ magnétique tournant (2) est disposé à l'intérieure de la face intérieure du conduit tubulaire (1).

_Fig_1_

_Fig 2_

_Fig 3_

_Fig 4_

*Fig 5.*